# EUROPEAN PATENT APPLICATION

(11) **EP 2 621 073 A1**
(43) Date of publication of application: **31.07.2013**
(21) Application number: 12152717.0
(22) Date of filing: 26.01.2012
(51) Int. Cl.: H02M 7/483

(54) **Multilevel converter**

(71) Applicant: Siemens Aktiengesellschaft, 80333 München (DE)
(72) Inventor: Das, Anandarup, 7022 Trondheim (NO); Nademi, Hamed, 7011 Trondheim (NO); Norum, Lars, 7013 Trondheim (NO)

(57) **Abstract**

A multilevel converter for performing a DC to AC or an AC to DC voltage conversion as provided. The multilevel converter has a first DC terminal and a second DC terminal, a first converter arm and a second converter arm, wherein each converter arm comprises at least one converter cell, at least one AC terminal and an electric component. The first converter arm, the electric component and the second converter arm are connected in series between the first DC terminal and the second DC terminal. The electric component is connected between the first converter arm and the second converter arm.

## Description

### FIELD OF THE INVENTION

The invention relates to a multilevel converter for performing a DC to AC or an AC to DC voltage conversion.

### BACKGROUND OF THE INVENTION

Multilevel converters have recently been employed for converting between a DC (direct current) voltage and an AC (alternating current) voltage. Such converters provide different voltage levels by which an AC voltage can for example be synthesized. The converter may further use a pulse width modulation (PWM) technique in the generation of the AC voltage. The use of different voltage levels at the AC output further reduces the required switching frequency for PWM. Similarly, such converter may be used for generating a DC voltage from an AC voltage input.

The Modular Multilevel Converter (MMC) is a promising multilevel converter topology proposed in recent times. Such converter has a modular structure, which provides redundant cells for fault tolerant applications and an easy scalability. An MMC can comprise a number of converter cells in series. Each cell can have of two switches and a capacitor. When one of the switches is turned on, the capacitor is bypassed and the output voltage of the converter cell is zero. When the other switch is turned on, the capacitor voltage is obtained at the output. With many cells connected in series, the output voltage of the converter can be made relatively smooth and no or very little filtering is required to improve the output voltage quality.

In such topology, to generate an output AC voltage having a desired peak-to-peak amplitude, each converter arm needs to be capable of generating a voltage having a magnitude larger than the AC peak-to-peak amplitude. The electrical and electronic components of the converter cells need to be rated accordingly. Higher rated components are often costlier and more difficult to produce.

### SUMMARY

Accordingly, there is a need for an improved multilevel converter, in particular for a multilevel converter capable of operating with components having a reduced voltage rating.

This need is met by the features of the independent claims. The dependent claims describe embodiments of the invention.

According to an embodiment of the invention a multilevel converter for performing a DC to AC or an AC to DC voltage conversion is provided. The multilevel converter comprises a first DC terminal, a first converter arm and a second converter arm, each converter arm comprising at least one converter cell, and at least one AC terminal. The multilevel converter further comprises an electric component, wherein the first converter arm, the electric component and the second converter arm are connected in series between the first DC terminal and the second DC terminal. The electric component is connected between the first converter arm and the second converter arm. The AC terminal is electrically coupled to the electric component such that a voltage applied across the electric component can be transformed to an output voltage on the AC terminal or that a voltage supplied to the AC terminal can be transformed to a voltage applied across the electric component.

Since a differential voltage across the electric component is picked up, e.g. when performing a DC to AC conversion, only lower voltages as compared to conventional multilevel converters need to be produced by each converter arm. As an example, a maximum of +/- half the peak to peak AC voltage may need to be provided across the electric component, for generating the output AC voltage having the full peak to peak amplitude. In each converter arm, components may thus be used which have a lower voltage rating.

In an embodiment, the electric component may comprise an inductor connected in series between the first converter arm and the second converter arm.

In an embodiment, the multilevel converter is an at least three-phase converter having an AC terminal for each phase. The first converter arm, the electric component and the second converter arm are part of a converter leg. The multilevel converter may comprise such converter leg for each phase (i.e. it may comprise three converter legs for the three phases), wherein the AC terminal for each phase is electrically coupled to the electric component of the respective converter leg. In such configuration, the multilevel converter may convert a DC voltage to a three- or more phase AC voltage, and may convert a three-or more phase AC voltage to a DC voltage.

In an embodiment, the electric component is a transformer having a first transformer winding and a second transformer winding, the first transformer winding being connected in series with the first converter arm and the second converter arm, the second transformer winding being connected to the AC terminal. The transformer provides a simple configuration in which a voltage across the first transformer winding can be provided at the AC terminal. The transformer may further be used to increase or decrease the voltage amplitude of a generated AC voltage.

The second winding of each transformer may have two terminals. One terminal of each second winding may be connected to the respective AC terminal. The other terminal may be connected to the corresponding other terminals of the second windings of the remaining transformers. In a three-phase multilevel converter, the other terminals of the second windings of the three transformers may thus be connected in a star configuration.

In an embodiment, a single inductance may be connected in series with the first converter arm and the second converter arm. The inductance may be provided by the first winding of the transformer. Accordingly, by means of the first winding of the transformer, circulating currents in the converter leg can be limited.

The ratio between the voltages on the first transformer winding and on the second transformer winding may be about 1:1. In particular, the winding ratio of the first transformer winding and the second transformer winding may be about 1 : 1.

In another embodiment, the voltage ratio of the voltage on the first transformer winding and on the second transformer winding may be smaller than about 1 : 1, for example between about 1 : 1 and about 1 : 3. In particular, the winding ratio of the first transformer winding and the second transformer winding may lie within the range of about 1 : 1 to about 1 : 3. This way, when used as a DC to AC converter, the voltage rating of the electric or electronic components in the converter arms may even further be reduced for achieving a particular desired peak to peak voltage amplitude of the generated AC voltage.

The multilevel converter may be configured to have a mode of operation in which the multilevel converter performs a DC to AC voltage conversion, wherein a DC voltage to be converted is provided between the first and second DC terminals, and wherein the first winding of the transformer is a primary winding and the second winding of the transformer is a secondary winding. Generally, the primary winding of a transformer is the winding to which a varying current is applied, whereas the secondary winding is the winding in which a voltage is induced by inductive coupling. Note that this mode of operation may be the only mode, i.e. the multilevel converter may be configured to operate as an inverter.

The multilevel converter may be configured to have a mode of operation in which the multilevel converter performs a AC to DC voltage conversion, wherein an AC voltage to be converted is provided at the one or more AC terminals, and wherein the second winding of the transformer is a primary winding and the first winding of the transformer is a secondary winding. Again, the multilevel converter may be provided with only this mode of operation, i.e. it may be configured to operate as a rectifier.

In other embodiments, the multilevel converter may be provided with both modes of operation, i.e. it may be operable as an inverter or a rectifier.

In an embodiment, the AC voltage at the AC terminal may have a certain peak to peak amplitude, wherein the converter cells of each converter arm are configured to cumulatively generate a maximum voltage smaller than about 70 % of the peak to peak amplitude, preferably smaller than about 60 % of the peak to peak amplitude. In some configurations, they may even be configured to generate a maximum voltage of less than 50 % of the AC peak to peak amplitude. Note that such configuration can be provided irrespective of whether the multilevel converter is operated as an inverter or a rectifier. The rating of the electric components of the converter arms can thus be reduced. The AC voltage at the AC terminal may be the output AC voltage generated by the multilevel converter, or it may be an AC voltage provided to the AC terminal as an input for conversion.

In an embodiment, each converter cell comprises a capacitor and is configured to act as a voltage source, the output of which is controllable. In the simplest case, the control may include the switching on or off of the voltage source. In more complex configurations, the voltage level may be controlled as well, continuously or in steps.

Each converter cell may comprise one or more switches for connecting the capacitor of the converter cell in series in the converter arm, i.e. in series between the first and second DC terminals. The one or more switches may be controllable from a control unit of the multilevel converter. As an example, a switch may be provided using which the capacitor or the converter cell may be bypassed, and the same switch or another switch may be used for connecting the capacitor of the cell in series between the first and second DC terminals, i.e. in series with other sells in the converter leg. The switch may be a semiconductor switch, such as an IGBT (isolated gate bipolar transistor), a thyristor or the like. Furthermore, the one or more switches may be controllable by the control unit so that the capacitor of the converter cell is charged, e.g. from a voltage applied across the first and second DC terminals, or applied to the AC terminal.

In an embodiment, the multilevel converter further comprises a control unit that is in communication with each converter cell and configured to control the output of each converter cell in such way that a voltage conversion in accordance with an actual mode of operation is achieved. When operating as an inverter, the control unit may for example control each converter cell such that at the AC terminal of the converter, an AC voltage is synthesized. Similarly, when operating as a rectifier, the cells may be controlled by the control unit in such a way that a DC voltage is synthesized at the DC terminals. Furthermore, the control unit may be configured to measure the voltage level, in particular the charging state of the capacitor of the converter cells by means of said communication. It may thus be configured to control the charging and the discharging of capacitors provided in the converter cells. As an example, the communication may be provided by optical means, in particular by a glass fiber or the like coupling the control unit optically to the converter cells. The control unit may furthermore be configured to perform a PWM scheme for achieving the desired voltage conversion.

In an embodiment, the multilevel converter is a modular multilevel converter (MMC) having at least two converter cells in each converter arm. Such configuration may provide a conversion with reduced disturbances, in which no or only little filtering of the converted voltage is required, and furthermore provides an easy scalability and failure safe operation, since converter cells may be swapped during operation and since a certain degree of redundancy is provided.

A further embodiment provides an HVDC (high voltage direct current) transmission system comprising a multilevel converter in any of the above described configurations for converting an AC voltage to a DC voltage for HVDC transmission or for converting a DC voltage received on an HVDC transmission line to an AC voltage. Such HVDC transmission system may for example be an HVDC converter station. Advantages similar to the ones outlined further above may be achieved in such transmission system.

Features of the embodiments of the invention mentioned above and those yet to be explained below can be combined with each other unless noted to the contrary.

### Brief description of the drawings

The foregoing and other features and advantages of the invention will become further apparent from the following detailed description read in conjunction with the accompanying drawings. In the drawings, like reference numerals refer to like elements.
Figure 1 is a schematic diagram illustrating a conventional modular multilevel converter (MMC).
Figure 2 is a diagram illustrating schematically the voltage at an AC terminal of the MMC of figure 1, and voltages generated by the converter arms at points A₁ and A₂ of the MMC of figure 1.
Figure 3 is a simplified schematic diagram of the MMC of figure 1.
Figure 4 is a schematic diagram illustrating a modular multilevel converter according to an embodiment of the invention.
Figure 5 is a schematic diagram illustrating the voltage at an AC terminal of the MMC of figure 4, and voltages generated by the converter arms of the MMC at points A₁ and A₂.
Figure 6 is a schematic diagram illustrating the configuration of a converter cell of the MMC of figure 4 in more detail.
Figures 7a, 7b and 7c are diagrams illustrating voltages and currents measured at a modular multilevel converter according to an embodiment of the invention having a configuration similar to the configuration of figure 4.

### Detailed description

In the following, embodiments illustrated in the accompanying drawings are described in more detail. It should be clear that the following description is only illustrative and non restrictive. The drawings are only schematic representations, and elements in the drawings are not necessarily to scale with each other. Connections between elements illustrated in the drawings may be direct or indirect couplings, i.e. they may be couplings with one or more intervening elements.

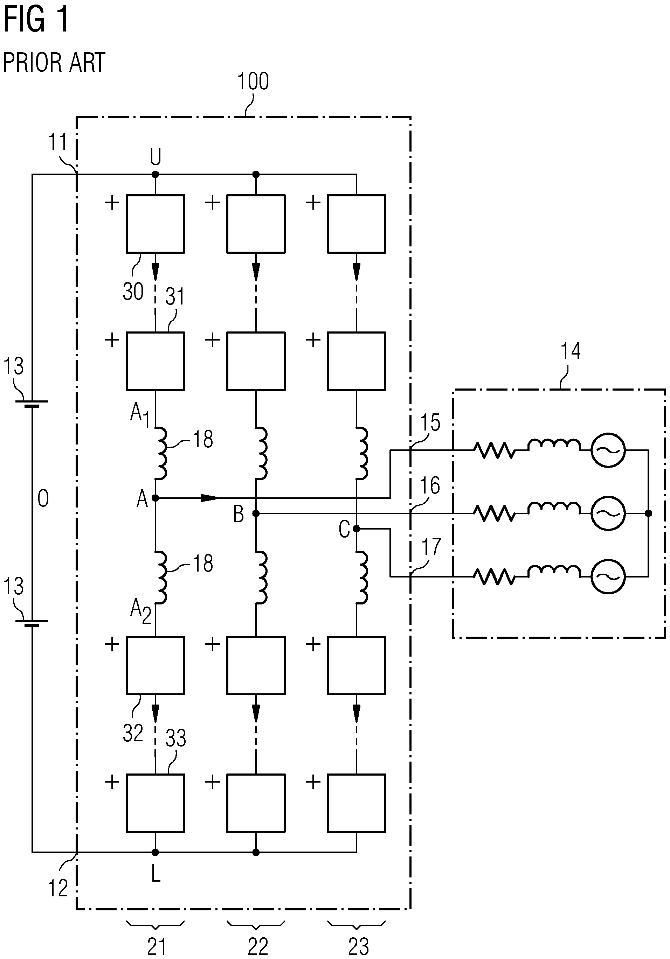

Figure 1 illustrates a conventional multilevel converter 100 operating as an inverter. The multilevel converter 100 is connected to a DC power source 13 and an AC load 14. The multilevel converter 100 has three converter legs 21, 22, 23 which are connected in parallel between the DC terminals 11 and 12. Each converter leg comprises a number of converter cells 30, 31, 32, 33 connected in series between the DC terminals, and further comprises two inductances 18 connected in series with the converter cells. The AC terminals 15, 16 and 17 are connected to the electrical link between the inductances 18 at the points A, B and C, respectively. The DC voltage source comprises two parts, with the link between the two parts being set to zero voltage potential (as indicated by O in figure 1). Note that such configuration of the voltage source was chosen only for the purpose of illustration, so that a well defined reference point O is available. It should be clear that the voltage source can be configured in accordance with the actual application. The voltage source may for example be a single capacitor, e.g. a capacitor provided on a DC bus, it may be the output of a rectifier or the like. The middle point (point O) may thus not be available, it may not physically exist. In other implementations, the voltage at point O may not be at zero potential, but at any other potential.

The converter cells of multilevel converter 100 operate as a voltage source, and by controlling the converter cells, the voltage potential at points A, B, and C can be adjusted. This way, an AC waveform can be synthesized at the AC terminals 15, 16 and 17.

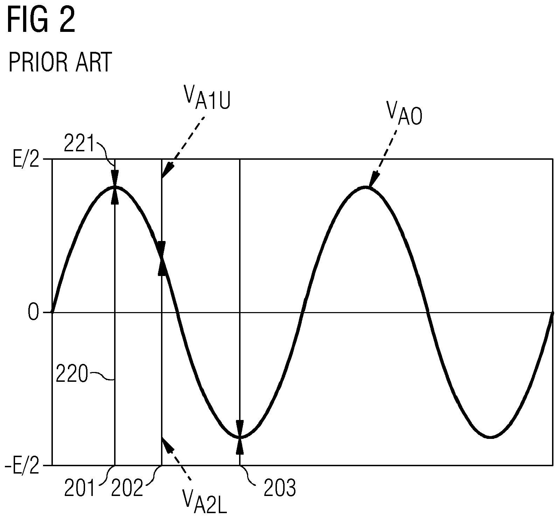

A first converter arm comprises the cells coupled between an AC terminal and the first DC terminal, and a second converter arm comprises the converter cells coupled between the AC terminal and the second DC terminal. For the converter leg 21, the voltages that have to be produced by the first converter arm (cells 30 ... 31) and the second converter arm (cells 32 ... 33) to synthesize an AC output voltage are illustrated in figure 2. In figure 2, E denotes the differential voltage provided by the DC voltage source 13. Accordingly, with the potential of zero volts provided between the two parts of the voltage source, the upper DC rail (DC terminal 11) has a voltage potential of E/2 whereas the lower DC rail (DC terminal 12) has a voltage potential of -E/2. The X-axis in figure 2 is the time axis. At the point in time 201, the voltage at the AC terminal 15 has maximum amplitude, which is achieved by the second converter arm generating a voltage close to E (arrow 220), whereas the first converter arm of converter leg 21 generates a negligible voltage (arrow 221). The voltage generated by the first converter arm is now increased, whereas the voltage of the second converter arm is decreased, so that the depicted AC wave form is generated (see points in time 202 and 203). Note that index U denotes the upper (or first) converter arm whereas index L denotes the lower (or second) converter arm.

As can be seen from the above, the prior art multilevel converter 100 requires each converter arm to generate a voltage that is almost equal to the DC voltage E provided by DC voltage source 13. The generated voltage needs to be slightly larger than to the peak to peak amplitude of the AC waveform provided at the AC terminals. Consequently, the electric components of the DC circuitry, and in particular of the converter cells need to be rated for at least the AC peak to peak voltage.

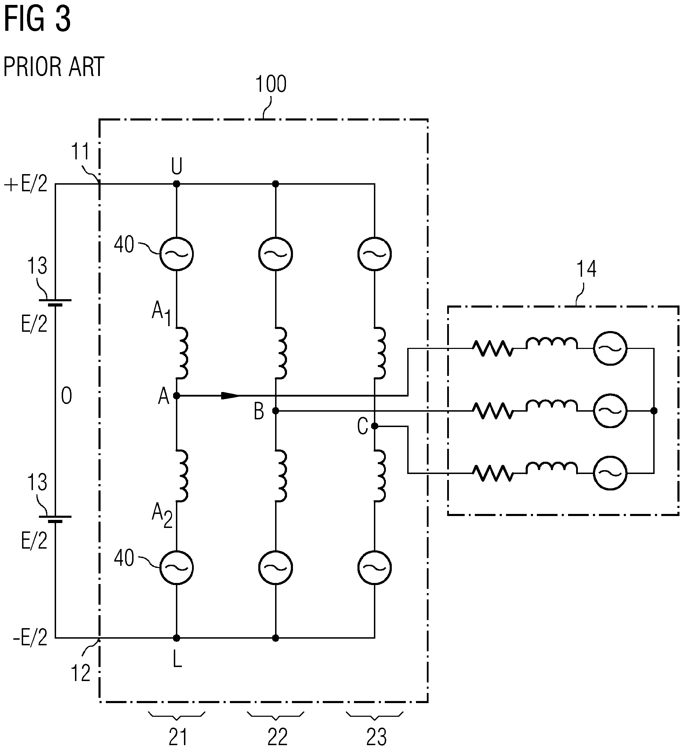

To achieve a more comprehensive representation, the converter cells of each converter arm are in the following replaced by a controlled voltage source 40, as illustrated in figure 3.

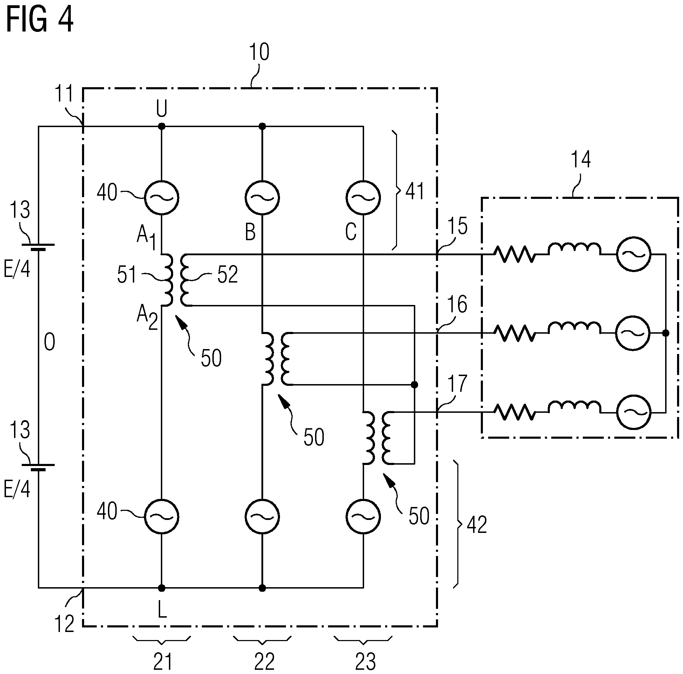

Figure 4 illustrates a multilevel converter 10 in accordance with an embodiment of the invention.

The multilevel converter 10 is adapted to perform a voltage conversion between an AC (alternating current) voltage and a DC (direct current) voltage. Multilevel converter 10 comprises a first DC terminal 11 and a second DC terminal 12 for connecting to a DC power source 13 or to a load requiring DC electrical power. Via terminals 11 and 12, the multilevel converter 10 may for example be connected to a DC transmission line for a HVDC (high voltage direct current) transmission of electrical energy.

On the AC side of the multilevel converter 10, AC terminals 15, 16 and 17 are provided for connecting a three phase AC power source or for supplying three phase AC power to an AC load 14, such as an AC motor or the like. In other configurations, only one AC terminal for supplying or receiving a single phase AC voltage may be provided. When a DC power source 13 is connected to the DC terminals 11 and 12 and an AC load 14 is connected to the terminals 15, 16 and 17, the multilevel converter 10 operates as an inverter. Vice versa, when an AC power source is connected to AC terminals 15, 16 and 17 and a DC load is connected to the DC terminals 11 and 12, the multilevel converter 10 operates as a rectifier. Note that the multilevel converter 10 may be configured either as a rectifier or as a converter, or may be configured to have both modes of operation

In the multilevel converter illustrated in figure 4, three converter legs 21, 22 and 23 are connected in parallel between the DC terminals 11 and 12. Each converter leg comprises a first or upper (U) converter arm 41 and a second or lower (L) converter arm 42. Each converter arm comprises one or more converter cells 31, 32, 33, 34, which are represented by the controlled voltage source 40 in figure 4. In this respect, the configuration is similar to the one of figure 1, so the explanations given above equally apply to the multilevel converter 10.

The converter cells can be provided as modules, and the multilevel converter 10 can be a modular multilevel converter (MMC). Such modular structure enables scalability and provides a certain redundancy of the converter cells which may be used for fault tolerant applications. It should be clear that the multilevel converter 10 may comprise further converter legs, or may comprise only one or two converter legs. In each converter leg 21, 22, 23, an electric component 50 is connected in series with the upper and lower converter arms 41, 42. In particular, the electric component 50 is connected between the upper and the lower converter arm. The electric component 50 is configured as such that a voltage drop occurs across the electric component 50. The electric component 50 couples to the respective AC terminal 15, 16 or 17 in such a way that a voltage proportional to the voltage drop across the electric component 50 is provided at the respective AC terminal.

Accordingly, to generate an AC waveform at the AC terminal, the voltage drop across the electric component 50 can be varied by means of the upper and lower converter arms 41, 42 generating a corresponding voltage. Since the output at the AC terminal is now proportional to the voltage drop across the electric component 50, the voltage that each converter arm needs to generate can be reduced, it can almost be halved.

In the example of figure 4, the electric component 50 is implemented in form of a transformer having a first winding 51 and a second winding 52. The first winding 51 is connected in series between the upper converter arm 41 and the lower converter arm 42. This configuration has the further advantage that the first transformer winding 51 acts as an inductance and thus reduces circulating currents in the respective converter leg 21, 22, 23. Accordingly, no additional inductance 18 as in the configuration of figure 1 is required.

The transformer provides an inductive coupling between the first transformer winding 51 and the second transformer winding 52. In some embodiments, a 1 : 1 ratio of the transformer windings may be chosen, so that the voltage across the first transformer winding 51 essentially corresponds to the voltage across the second transformer winding 52 (neglecting losses). In other configurations, different winding ratios may be chosen, so that the voltage at the second transformer winding 52 may be increased. The winding ratio between the first and second transformer windings may for example lie within a range of about 1 : 1 to about 1 : 3. Note that these are only examples given for the purpose of illustration, and that the winding ratio between the first and second transformer windings may be any number (less than, equal to or more than 1). The winding ratio can be chosen to meet the requirements of the actual application of the multilevel converter.

Note that the above explanations equally apply to each of the converter legs 21, 22, 23, wherein the phase may be shifted for each converter leg so as to achieve a three phase AC output at terminals 15, 16 and 17. As can be seen from figure 4, this can be achieved by connecting one terminal of each second winding of the transformer to the respective AC terminal 15, 16 or 17. The other terminal of the second transformer windings are connected together in a star configuration, thus providing a common reference.

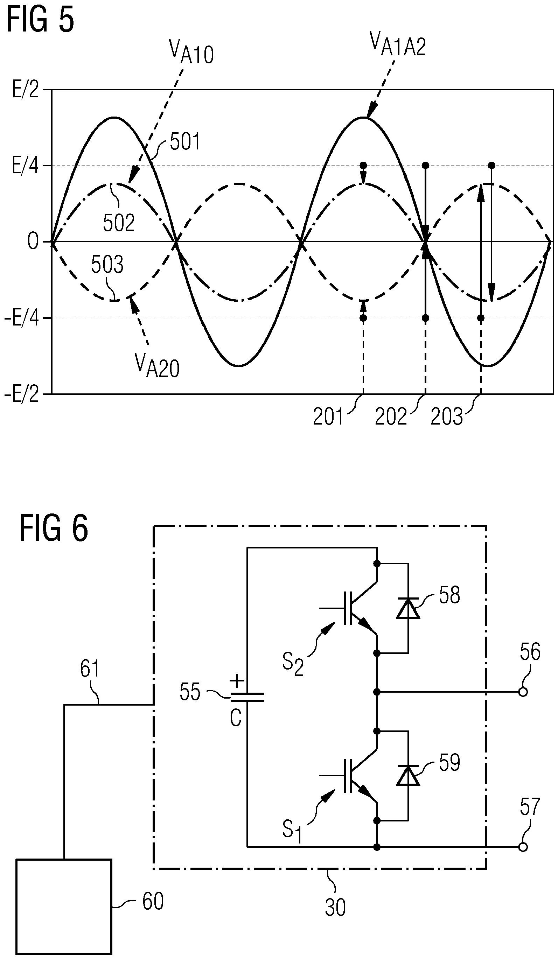

With the configuration of figure 4, only half the voltage needs to be provided by the DC power source 13. Accordingly each part of power source 13 provides a voltage of E/4. The voltage potential at DC terminal 11 is accordingly +E/4, whereas the voltage potential at DC terminal 12 is -E/4, with common ground being at O. The voltages that need to be generated by each converter arm 41, 42 to generate an AC voltage at the AC terminal 15, 16, 17 similar to the AC voltage illustrated in figure 2 is shown in figure 5. Line 501 illustrates the AC voltage at the AC terminal. The dotted line 502 is the voltage at point A₁ in figure 4, whereas the dashed line 503 is the voltage at point A₂ of figure 4, always with respect to the zero potential O. Since the voltage drop across the first transformer winding 51 is now provided at the AC terminal, the difference between these two voltages has to be taken for obtaining the output AC voltage 501. Arrows again indicate in figure 5 for three points in time 201, 202 and 203 the voltage that has to be generated by the upper or lower converter arm. Note that as indicated above, the first and second DC terminals 11 and 12 are now at the voltages +E/4 and -E/4, respectively, so that these are the voltage levels from which the arrows start. As can be seen at the point in time 203, the maximum voltage that needs to be generated by a converter arm is less than E/2. It is only slightly higher than half of the peak to peak voltage of the AC voltage waveform 501.

As mentioned above, a voltage source 13 having two parts and a zero voltage reference point between the parts was only chosen for the purpose of illustration. Any DC voltage source may be employed with the embodiment, e.g. a single capacitor, the output of a rectifier or the like. The point O may accordingly not exist.

Note that the diagrams of figures 2 and 5 are only schematic representations of the waveforms given for the purpose of illustration. In a real application, the waveforms will look different, since for achieving an AC voltage waveform, pulse with modulation (PWM) will generally be used in addition. Figures 2 and 5 neglect effects caused by PWM.

Accordingly, with the configuration of figure 4, each converter arm is only required to produce less than half of the voltage E. The transformer basically performs a subtraction of the voltage provided by the upper converter arm and the lower converter arm, thus achieving the reduced voltage requirements. Assuming an ideal transformer, the voltage across the first transformer winding 51 will then be impressed on the load 14 connected to the second transformer winding 52. Since the converter arms only need to produce about half of the voltage as compared to a conventional multilevel converter, the converter cells and in particular the capacitors in the converter cells can be rated at half of the rating of the conventional multilevel converter. Further, the DC bus magnitude can also be reduced to half the value of a conventional multilevel converter (e.g. the DC power source 13 needs to provide only half the voltage). Furthermore, the topology of the multilevel converter can remain essentially the same, so no special design of the multilevel converter is required. The inductance of the first transformer winding 51 further helps in limiting the circulating current in the respective converter arm 21, 22 or 23. Also, by using a transformer with a different winding ratio, the voltage rating on the DC side of the multilevel converter may even further be reduced.

Figure 6 illustrates an embodiment of a converter cell 30 which may be used with any of the embodiments of the multilevel converter 10 described herein, i.e. one ore more of such converter cells may be used in the controlled voltage source 40. Each of the converter cells 30, 31, 32, 33 and the other converter cells of the multilevel converter may be configured as illustrated in figure 6. Converter cell 30 comprises a first switch S1 and a second switch S2 and a capacitor 55. Switches S1 and S2 may be semiconductor switches, in particular IGBTs, power MOSFETs, power thyristors or the like. Diodes 58 and 59 are furthermore coupled to the switches S1 and S2.

The converter cell 30 is connected in series with the other converter cells of the converter leg using the terminals 56 and 57. By means of the switches S1 and S2, the voltage at the terminals of the converter cell 30 can be switched to either zero volt (cell is bypassed) or to the voltage to which the capacitor 55 is charged. When switch S1 is closed, the capacitor is bypassed and the output voltage of the cell is zero. When S2 is closed, the capacitor voltage is obtained at the terminals. By connecting several cells in series in the converter arm, the output voltage of the converter arm can be adjusted to different voltage levels. Thus, at the AC terminal coupled by electric component 50 to the converter leg, different output voltages can be obtained, and can be adjusted so as to obtain a relatively smooth alternating voltage that requires no or only a small about of filtering to improve the output voltage quality.

Each converter cell 30 may furthermore comprise a control interface for controlling the switches S1 and S2 and for obtaining information on the status, in particular the charging state of the capacitor 55. Such information may be obtained by a voltage sensor (not shown). As an example, a bidirectional fiber optic interface 61 may be provided in addition to the electric terminals 56 and 57.

The multilevel converter 10 may comprise a control unit 60 which is connected by such interface 61 to each converter cell of the multilevel converter 10. The control unit 60 controls the state of the switches S1 and S2 of each converter cell 30 and furthermore measures the voltage level of capacitor 55. By means of corresponding control software running on control unit 60 and controlling the switches S1 and S2, the charging level of capacitor 55 can be controlled during the operation of the multilevel converter, and accordingly, the voltage supplied by the converter cell 30 can be controlled for generating the required AC output voltage. For the purpose of a comprehensive presentation, control unit 60 is not shown in figure 4.

Converter cell 30 may be a converter module (or may be termed submodule), and converter 10 may be a modular multilevel converter. In particular, the converter 10, apart from the electric component 50, may be configured and operated as described in the publication "An innovative modular multilevel converter topology suitable for a wide power range" by A. Lesnicar and R. Marquardt, in Proc. of IEEE Power Tech Conf. 2003, pp. 1-6, which is incorporated herein by reference in its entirety.

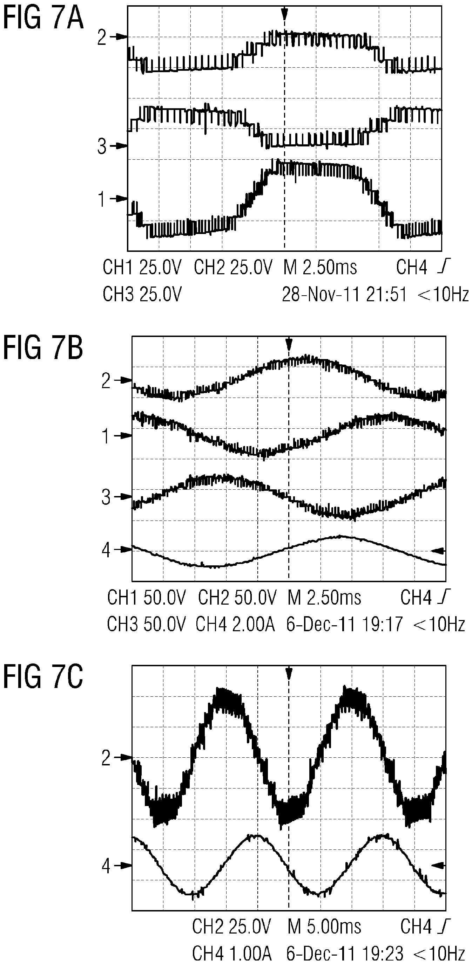

Figures 7A, 7B and 7C illustrate experimental results obtained from a multilevel converter having a configuration similar to the configuration of figure 4. In this embodiment, the control unit comprises a DSP (digital signal processor) for generating the pulse width modulation (PWM) pulse pattern for controlling the voltage of the converter cells. In the examples of figures 7A to 7C, a DC link voltage E of 30 volt was used. In this embodiment, the multilevel converter comprises three converter legs, with each converter arm having 3 converter cells. A transformer having a transformer inductance of 0.18 mH was used. The frequency of the AC output was 50 Hz. A transformer resistance of 0.67 Ω was used. The cell capacitance was 6,800 µF.

Figure 7A illustrates the voltages of the upper and lower converter arms of a converter leg. Since each converter arm comprises three converter cells connected in series, there are three steps the waveform produced by each converter arm (curves 2 and 3 of figure 7A). The curve designated by numeral 1 is the transformer primary voltage, i.e. the voltage drop across the electric component 50. As can be seen, the waveform has seven steps.

Figure 7B shows the voltages at the three AC terminals of the multilevel converter (curves 1, 2 and 3). The lower curve designated by numeral 4 is the load current of the converter. As can be seen, a relatively smooth AC voltage output can be achieved.

Figure 7C further illustrates the line voltage (curve 2). The lower curve 4 shows the line current waveform.

During operation, all capacitors of the converter cells can be balanced to a voltage of the DC Bus voltage divided by the number of converter cells, in the present example to 30/3 = 10 V. When starting up operation of the multilevel converter, the capacitors of each converter arm can be pre-charged from the DC Bus. Charging may occur through a resistance, and the capacitors of the converter cells may be connected in series during charging, so that each capacitor is charged to the DC Bus voltage divided by the number of capacitors.

As can be seen from the above, by making use of the electric component 50 coupled between the converter arms of each converter leg, in particular by making use of a transformer having a first and a second winding, the rating of the converter components can be reduced while obtaining the same AC voltage level at the output AC terminals.

While the above explanations were given with reference to a operating mode of the multilevel converter 10 in which the multilevel converter acts as an inverter, i.e. performing a DC to AC voltage conversion, the explanations are equally applicable to a multilevel converter configured to operate as a rectifier, i.e. to perform a AC to DC voltage conversion. In such configuration, the voltage to be converted is provided at the one or more AC terminals, a three-phase AC voltage may for example be provided at AC terminals 15, 16 and 17. DC terminals 11 and 12 are then connected to a DC load, which may also be a DC transmission line to the other end of which a load or an inverter is coupled. In such case, the AC voltage applied to the AC terminals results in a voltage drop across the second transformer winding 52, resulting in an induced voltage in the first transformer winding 51. By means of control unit 60 performing a switching of the converter cells, the voltage induced in the first transformer winding of each converter leg is transformed into a DC voltage on the DC terminals 11 and 12. The second transformer winding 52 thus acts as a primary winding of the transformer, and the first transformer winding 51 acts as a secondary winding of the transformer.

While specific embodiments are disclosed herein, changes an modifications can be made without departing from the scope of the invention. Features of the embodiments may be combined with each other unless noted to the contrary. The present embodiments are to be considered in all respects as illustrative and non restrictive, and any changes coming within the meaning and equivalency range of the appended claims are intended to be embraced therein.

## Claims

1. A multilevel converter for performing a DC to AC or an AC to DC voltage conversion, the multilevel converter comprising:
- a first DC terminal (11) and a second DC terminal (12),
- a first converter arm (41) and a second converter arm (42), each converter arm comprising at least one converter cell (30);
- at least one AC terminal (15, 16, 17); and
- a electric component (50),
wherein the first converter arm (41), the electric component (50) and the second converter arm (42) are connected in series between the first DC terminal (11) and the second DC terminal (12), the electric component being connected between the first converter arm and the second converter arm, wherein the AC terminal (15, 16, 17) is electrically coupled to the electric component (50) such that a voltage applied across the electric component can be transformed to an output voltage on the AC terminal or that a voltage supplied to the AC terminal can be transformed to a voltage applied across the electric component.

2. The multilevel converter according to claim 1, wherein the multilevel converter is an at least three phase converter having an AC terminal (15, 16, 17) for each phase, wherein the first converter arm (41), the electric component (50) and the second converter arm (42) are part of a converter leg (21), the multilevel converter comprising such converter leg (21, 22, 23) for each phase, the AC terminal (15, 16, 17) for each phase being coupled to the electric component (50) of the respective converter leg (21, 22, 23).

3. The multilevel converter according to claim 1 or 2, wherein the electric component (50) is a transformer having a first transformer winding (51) and a second transformer winding (52), the first transformer winding being connected in series with the first converter arm and the second converter arm, the second transformer winding being connected to the AC terminal.

4. The multilevel converter according to claim 2 and 3, wherein the second winding of each transformer has two terminals, one terminal of each second winding being connected to the respective AC terminal, the other terminal being connected to the corresponding other terminals of the second windings of the remaining transformers.

5. The multilevel converter according to any of claims 3-4, wherein a single inductance is connected in series with the first converter arm and the second converter arm, the inductance being provided by the first transformer winding (51) of the transformer.

6. The multilevel converter according to any of claims 3-5, wherein the voltage ratio of the voltage on the first transformer winding (51) and the second transformer winding (52) is about 1:1.

7. The multilevel converter according to any of claims 3-5, wherein the voltage ratio of the voltage on the first transformer winding (51) and on the second transformer winding (52) is smaller than about 1:1, preferably between about 1:1 and about 1:3.

8. The multilevel converter according to any of any of claims 3-7, wherein the multilevel converter is configured to have a mode of operation in which the multilevel converter performs a DC to AC voltage conversion, wherein a DC voltage to be converted is provided between the first and second DC terminals, wherein the first winding of the transformer is a primary winding and the second winding of the transformer is a secondary winding.

9. The multilevel converter according to any of claims 3-8, wherein the multilevel converter is configured to have a mode of operation in which the multilevel converter performs a AC to DC voltage conversion, wherein an AC voltage to be converted is provided at the one or more AC terminals, and wherein the second winding of the transformer is a primary winding and the first winding of the transformer is a secondary winding.

10. The multilevel converter according to any of the preceding claims, wherein the AC voltage at the AC terminal has a peak to peak amplitude, wherein the converter cells of each converter arm are configured to cumulatively generate a maximum voltage smaller than 70% the peak to peak amplitude, preferably smaller than 60% of the peak to peak amplitude.

11. The multilevel converter according to any of the preceding claims, wherein each converter cell (30) comprises a capacitor (55) and is configured to act as a voltage source the output of which is controllable.

12. The multilevel converter according to claim 11, wherein each converter cell comprises one or more switches (S1, S2) for connecting the capacitor (55) of the converter cell (30) in series in the converter arm (41, 42), the one or more switches (S1, S2) being controllable from a control unit (60) of the multilevel converter.

13. The multilevel converter according to any of the preceding claims, further comprising a control unit (60) that is in communication with each converter cell (30) and configured to control the output of each converter cell (30) in such way that a voltage conversion in accordance with a current mode of operation is achieved.

14. The multilevel converter according to any of the preceding claims, wherein the multilevel converter (10) is a modular multilevel converter having at least two converter cells (30) in each converter arm (41, 42).

15. An HVDC transmission system comprising a multilevel converter (10) according to any of claims 1-14 for converting an AC voltage to a DC voltage for HVDC transmission or for converting a DC voltage received on an HVDC transmission line to an AC voltage.
